Europäisches Patentamt

European Patent Office

Office européen des brevets

(19)

(11) Veröffentlichungsnummer: **0 008 093**
**A1**

## (12) EUROPÄISCHE PATENTANMELDUNG

(21) Anmeldenummer: 79102799.8

(22) Anmeldetag: 03.08.79

(51) Int. Cl.³: **A 61 C 13/00**

(30) Priorität: 10.08.78 DE 2835094

(43) Veröffentlichungstag der Anmeldung: 20.02.80
Patentblatt 80/4

(84) Benannte Vertragsstaaten: AT BE CH FR IT LU NL SE

(71) Anmelder: **Tretschoks, Dietmar, Quiddestrasse 42,
D-8000 München 83 (DE)**

(72) Erfinder: **Tretschoks, Dietmar, Quiddestrasse 42,
D-8000 München 83 (DE)**

(74) Vertreter: **Lorenz, Eduard et al,
Widenmayerstrasse 23, D-8000 München 22 (DE)**

(54) Vorrichtung zum Anfertigen von Kronen, Brücken, Zahnprothesen oder dergleichen.

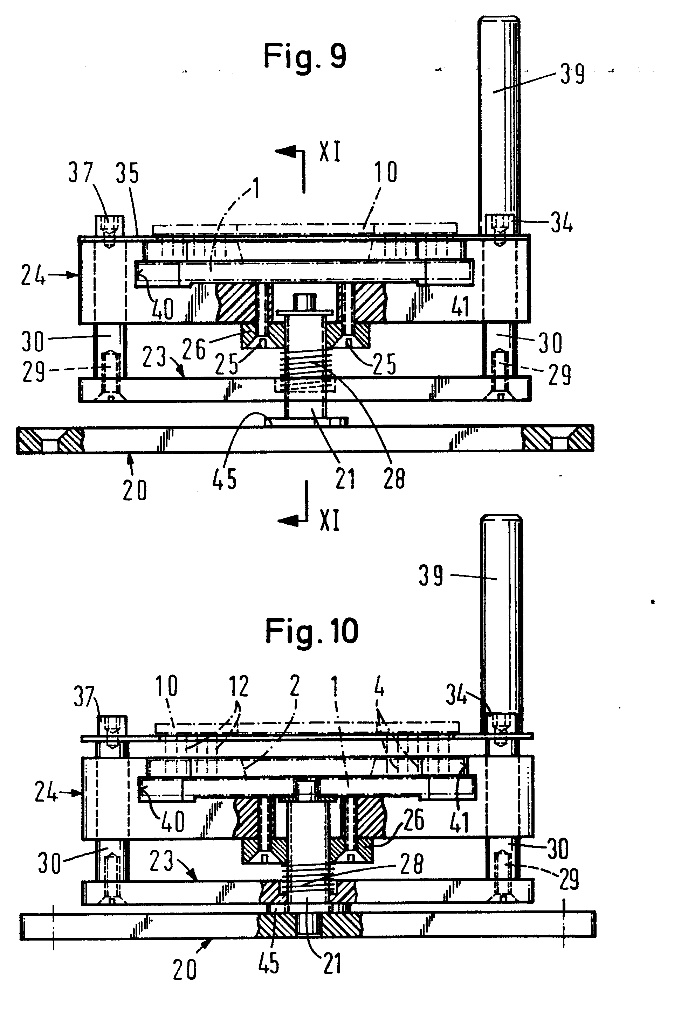

(57) Eine Vorrichtung zum Anfertigen von Kronen, Brücken, Zahnprothesen oder dergleichen weist einen Träger für das durch Ausgießen des von dem Kiefer abgenommenen Abdrucks hergestellte Modell auf. Um Meistermodelle herstellen zu können, aus denen sich einfach und beschädigungsfrei einzelne Teile entnehmen und lagegenau wieder einsetzen lassen, besteht der Träger aus einer Modellträgerplatte (10), die auf ihrer Rückseite mit dicht nebeneinander angeordneten Rastvorsprüngen (12) versehen ist, die zur lösbaren Fixierung in mit diesen fluchtenden Ausnehmungen einer Sockelplatte (1) eindrückbar sind. Mit einer Trennvorrichtung (Fig. 9) lassen sich die Modellträgerplatte (10) und die Sockelplatte (1) verkantungsfrei voneinander trennen.

EP 0 008 093 A1

- 1 -

## Vorrichtung zum Anfertigen von Kronen, Brücken, Zahnprothesen oder dergleichen

Die Erfindung betrifft eine Vorrichtung zum Anfertigen von Kronen, Brücken, Zahnprothesen oder dergleichen mit einer Modellträgerplatte für das durch Ausgießen des von dem Kiefer entnommenen Abdrucks des Zahnkranzes hergestellte Modell, die auf ihrer dem Modell zugewandten Seite strukturiert ist und auf der gegenüberliegenden Seite Vorsprünge aufweist und die zur Entnahme einzelner Zahnmodelle zersägbar ist.

Um Kronen, Brücken, Zahnprothesen, Zahnspangen zur Kiefer- und Zahnregulierung oder dergleichen herzustellen, benötigt der Zahntechniker ein sogenanntes Meistermodell, das dieser durch Ausgießen des von dem Zahnarzt dem Kiefer des Patienten entnommen Abdrucks, beispielsweise aus einer Silikon-Masse, mit Gips herstellt. Dabei geht der Zahntechniker üblicherweise in der Weise vor, daß zunächst zur Erstellung des Modells des Zahnkranzes der Abdruck mit Gips ausgegossen wird. Der Zahntechniker muß sodann einen zweiten Gips anrühren und diesen zum Gipsen des Sockels, der das Modell des Zahnkranzes trägt, auf den ersten Gips auftragen.

Weist das herzustellende Meistermodell Zahnstümpfe auf, für die Kronen herzustellen sind, so müssen diese aus dem Modell herausnehmbar sein, um die Kronen in das Modell genau einpassen zu können. Zu diesem Zwecke werden nach dem Ausgießen des Abdrucks mit dem ersten Gips in die Zahnstümpfe Stifte, sogenannte Dowel-Pins, eingesetzt, bevor der den Träger bildende Sockel, in dem die Stifte gehaltert sind, aufgegipst wird. Um eine Beschädigung des Modells zu verhindern, müssen die Dowel-Pins möglichst parallel eingesetzt werden. Dies läßt sich mit speziellen Pin-Setzgeräten erreichen, was jedoch einen zusätzlichen Aufwand bedeutet.

Um die Partien des Modells, die nicht herausnehmbar sein sollen, fest mit dem Sockel zu verbinden, ist es weiterhin erforderlich, in diese sogenannte Retentionsringe einzusetzen, die durch das Angipsen des Sockels mit diesem verbunden werden. Aus dem in dieser Weise hergestellten Modell lassen sich die mit Dowel-Pins versehenen Stümpfe herausnehmen, wenn diese durch senkrechte Schnitte von dem Zahnkranzmodell getrennt werden. Voraussetzung hierzu ist jedoch, daß das Zahnkranzmodell mit dem Sockel keine feste Verbindung eingeht. Zu diesem Zweck muß zunächst das Erhärten des Zahnkranzmodells abgewartet werden, um auf dieses eine Trenn- oder Isolierschicht aufbringen zu können. Auf diese Isolierschicht wird sodann der Sockel aus Gips aufgegossen. Nun muß abgewartet werden, bis auch der Sockel erhärtet ist. Erst nach Erhärten auch des Sockels kann das Modell von dem Abdruck abgezogen werden. Anschliessend wurde der Sockel des Modells an einem sogenannten Gipstrimmer zugeschliffen, was wiederum einen zusätzlichen Aufwand an Zeit und Geräten bedeutet. Das so vorbereitete Modell muß sodann gereinigt werden. Erst dann ist das Modell so weit vorbereitet, daß die einzelnen zu bearbeitenden Zahnstümpfe herausgesägt werden können. Trotz sorgfältigster Bearbeitung besteht bei diesem herkömmlichen Verfahren immer die Gefahr, daß der in dem zu entnehmenden Zahnstumpf sitzende Dowel-Pin die dünne Ummantelung aus Gips durchbricht. Dadurch kann das gesamte Modell unbrauchbar werden.

Aus der DE-GMS 7 412 852 ist eine Modellträgerplatte der eingangs angegebenen Art bekannt, auf deren mit pilzförmigen oder noppenartigen Vorsprüngen versehene Seite das noch nicht ausgehärtete Zahnkranzmodell zur Verbindung mit dieser aufgedrückt wird. Anschließend werden durch die Platte Löcher in den Zahnkranz eingebohrt, in die sodann die Pins eingeschoben und in diesen durch eine Klebemasse befestigt werden. Die mit den Pins versehene und das Zahnkranzmodell tragende Platte wird sodann auf einen aus Gips bestehenden Modellsockel mit ihrer strukturierten Seite aufgesetzt. Die Platte läßt sich sodann von dem Modellsockel, in dem sich ein zu der strukturierten Oberfläche der Platte komplementäres Relief ausgebildet hat, abheben und mit dem Zahnkranzmodell zersägen. Die Einzelteile lassen sich sodann wieder über die Pins in den Gipssockel einsetzen, in dem diese sodann aufgrund ihrer Strukturierung gegen ein Verdrehen gesichert sind.

Auch die bekannte Modellträgerplatte macht es noch immer erforderlich, einen Gipssockel herzustellen, in dem sodann die zersägten Teile der Platte mit den zersägten Teilen des Zahnkranzmodells durch Stifte gesichert werden müssen.

Schließlich besteht die Gefahr, daß nach wiederholtem Herausnehmen der Stift in dem Sockel locker wird, so daß sich die Krone nicht mehr exakt in das Modell einpassen läßt.

Aufgabe der vorliegenden Erfindung ist es daher, eine Vorrichtung zu schaffen, mit der schnell und in einfacher Weise Meistermodelle hergestellt werden können, aus denen sich anschließend ohne Schwierigkeiten und ohne deren Beschädigung befürchten zu müssen, einzelne Teile entnehmen und lagegenau in diese wieder einsetzen lassen.

Erfindungsgemäß wird diese Aufgabe dadurch gelöst, daß der Träger aus einer Modellträgerplatte besteht, die auf ihrer Rückseite mit dicht nebeneinander angeordneten Rastvorsprüngen versehen ist, die zur lösbaren Fixierung in mit diesen fluchtenden Ausnehmungen einer Sockelplatte eindrückbar sind. Mit der erfindungsgemäßen Vorrichtung wird das Meistermodell dadurch hergestellt, daß die Modellträgerplatte nach dem Ausgießen des Abdrucks auf den das Zahnkranzmodell bildenden Gips aufgedrückt wird. Nach dem Erhärten des Gipses läßt sich das Meistermodell mit der Modellträgerplatte aus dem Abdruck abziehen. Es ist also weder erforderlich, in die Zahnstümpfe, die einzeln entnommen werden sollen, besondere Stifte einzusetzen, noch die Teile, die fest mit dem Meistermodell verbunden bleiben sollen, durch besondere Verankerungen mit einem Sockel zu verbinden. Denn die das Meistermodell tragende Modellträgerplatte läßt sich auch dann immer lagerichtig durch einfaches Aufstecken mit der Sockelplatte verbinden, wenn diese durch beliebig viele Trennschnitte zersägt ist. Bei der erfindungsgemäßen Vorrichtung lassen sich also aus dem Meistermodell beliebig viele Zähne oder Zahnteile heraussägen, wobei die Trennschnitte auch durch die Modellträgerplatte hindurchgeführt werden. Auf der Sockelplatte läßt sich das zersägte Meistermodell immer wieder lagerichtig zusammenfügen, ohne daß ein Wackeln oder Beschädigen der Modellteile befürchtet werden müßten.

Zweckmäßigerweise ist die Modellträgerplatte entsprechend der Kieferform in ihrer Ebene U-förmig gekrümmt.

Um sicherzustellen, daß die Modellträgerplatte mit dem Gipsmodell eine feste Verbindung eingeht, ist die Modellträgerplatte auf ihrer Oberseite mit dicht nebeneinanderliegenden Ausnehmungen besetzt. Eine besonders gute Verankerung des Gipsmodells in diesen Ausnehmungen wird dann erreicht, wenn diese hinterschnitten sind.

Die Rastvorsprünge können aus konusförmigen Zapfen bestehen und die Ausnehmungen der Sockelplatte komplementär zu diesen ausgebildet sein.

Die Modellträgerplatte kann mit seitlichen Vorsprüngen versehen sein, die deren Abheben von der Sockelplatte ermöglichen

Weiterhin kann die Modellträgerplatte mit einer seitlichen Nut zum Aufschieben eines Paßstückes versehen sein, über das sich diese mit der Sockelplatte verriegeln läßt.

Sowohl die Sockelplatte als auch die Modellträgerplatte können aus Kunststoff entsprechender Härte bestehen.

In weiterer Ausgestaltung der Erfindung ist die Sockelplatte mit einem abgesetzten umlaufenden Rand versehen, auf den ein Deckel mit herabgezogenen Seitenwänden klemmend aufsetzbar ist. Durch Aufsetzen dieses Deckels auf die Sockelplatte läßt sich eine versandfertige Packung herstellen. Diese kann dazu benützt werden, um die von dem Zahntechniker erstellten Arbeiten dem Zahnarzt zu übersenden. Um die von dem Zahnarzt dem Patienten einzusetzenden Kronen, Brücken oder Prothesen festzulegen, kann über das Modell mit den Ersatzstücken eine Folie gespannt werden.

Zweckmäßigerweise besteht der Deckel aus Plexiglas.

In weiterer Fortbildung der Erfindung kann der Deckel auf seiner Oberseite mit einem Loch versehen sein. Um ein Duplikat des Meistermodells herzustellen, wird durch dieses Loch eine Dubliermasse eingefüllt. Nach Erhärten dieser Dubliermasse wird die Sockelplatte mit dem Meistermodell abgezogen. Auf diese Weise ist ein Abdruck erstellt worden, mit dem sich ein Duplikat des Meistermodells herstellen läßt.

Das Duplikat des Meistermodells läßt sich in vorteilhafter Weise dadurch herstellen, daß auf den Deckel eine Gußverschlußplatte mit einem der Sockelplatte entsprechenden umlaufenden Rand aufsetzbar ist, der mit einer Öffnung versehen ist. Durch die Öffnung läßt sich sodann zur Herstellung des Duplikats des Meistermodells eine Einbettmasse einfüllen.

In weiterer Ausgestaltung der Erfindung kann etwa mittig in der Sockelplatte eine Ausnehmung vorgesehen sein, in die ein Zentrierstift einsetzbar ist, und die Gußverschlußplatte an der entsprechenden Stelle einen Trichter aufweisen. In die vorzugsweise konische Ausnehmung der Sockelplatte läßt sich sodann der ebenfalls vorzugsweise konusförmige Zentrierstift einsetzen, um beispielsweise mit einem Parallelometer Vermessungen vornehmen zu können. Das Duplikat des Meistermodells weist durch den Trichter oder das von diesem geformte Loch eine entsprechende Ausnehmung wie die Sockelplatte auf, so daß sich auch in diese der Zentrierstift einsetzen läßt und identische Vermessungen wie bei dem Meistermodell vorgenommen werden können.

Um die nach dem bisherigen Verfahren hergestellten Meistermodelle an einem Artikulator befestigen zu können, mußten diese durch einen weiteren Gips mit dem Sockel verbunden werden. Wurde das Meistermodell von einem Artikulator gelöst, waren umständliche Einrichtarbeiten erforderlich, um dieses erneut lagerichtig zu befestigen. Nach einer weiteren Ausgestaltung der erfindungsgemäßen Vorrichtung ist vorgesehen, daß die Sockelplatte auf ihrer Rückseite mit der Zentrierung auf dem Artikulator dienenden Ausnehmungen (Splitcast) versehen ist. Diese Ausnehmungen können aus drei sternförmig zueinander angeordneten nutförmigen Vertiefungen bestehen. Ein einfaches und schnelles Fixieren der erfindungsgemäßen Vorrichtung beispielsweise auf einem Artikulator ist gewährleistet, wenn auf der Rückseite der Sockelplatte zusätzlich eine Eisenplatte eingelassen ist, die von einem in der Befestigungsvorrichtung angeordneten Magneten angezogen wird.

Ein besonderes Problem ist es, die auf das Zahnkranzmodell modellierte Wachsprothese bzw. Brücke, deren einzelnen Teile mit dem Gießtrichter durch Wachsstränge, die die späteren Gießkanäle bilden, verbunden sind, beschädigungsfrei und ohne Verformung von dem Zahnkranzmodell abzuheben. Bisher war es erforderlich, das Meistermodell von hinten anzuschleifen und die einzelnen, die Zahnstümpfe tragenden Fixierstifte so weit freizulegen, daß sich über die mit den Zahnstümpfen die modellierte Wachsprothese gleichmäßig herausdrücken und nach Lockerung von den Zahnstümpfen abheben läßt. Dieses Verfahren ist nicht nur mühselig, sondern es birgt auch die Gefahr einer Beschädigung des Wachsmodells in sich. Denn bei jedem Vorschieben eines Fixierstiftes entstehen Spannungen in dem Wachsmodell, die zu Beschädigungen führen können.

Um das Wachsmodell beschädigungsfrei von dem Zahnkranzmodell abheben zu können, ist nach einer erfinderischen Weiterbildung daher vorgesehen, daß die das Zahnkranzmodell tragende und auf die Sockelplatte aufgesteckte, gegebenenfalls in mehrere Stücke zersägte Modellträgerplatte mit diesem in einem Rahmen einschiebbar ist, der die Sockelplatte senkrecht zu seiner mit Ausnehmungen versehenen Oberseite festlegt, daß parallel zu dem Rahmen ein zweiter, unter einen umlaufenden Rand der Modellträgerplatte greifender, eine Abhebeplatte bildender Rahmen angeordnet ist und daß Einrichtungen vorgesehen sind, die die miteinander fluchtenden Rahmen parallel zueinander voneinander weg und aufeinander zu bewegen. Mit der rahmenförmigen Abhebeplatte läßt sich die Modellträgerplatte von der Sockelplatte parallel zu sich selbst abheben, so daß ein auf das Zahnkranzmodell aufmodelliertes Wachsmodell dadurch beschädigungsfrei von diesem abgehoben werden kann, daß die zersägten Teile des Zahnkranzmodells und der Trägerplatte vorsichtig von diesem abgezogen werden. Das Wachsmodell mit den mit dem Gießtrichter verbundenen, die späteren Gießkanäle bildenden Wachssträngen wird sodann in bekannter Weise in eine Gußküvette eingehängt und mit Gießmasse ausgegossen.

Der die Sockelplatte festlegende Rahmen der Abhebevorrichtung weist zweckmäßigerweise Führungsbohrungen für parallel zueinander auf einer Tragplatte befestigte Führungsstangen auf, wobei die unter den Rand der Modellträgerplatte greifende Abhebeplatte auf diesen Führungsstangen befestigt ist und zum Verschieben des Rahmens und der Abhebeplatte relativ zueinander eine Verstellspindel vorgesehen ist. Dabei kann die Spindelschraube auf einer die Tragplatte in einer gewindefreien Bohrung durchsetzenden Basisplatte befestigt, der auf den Stangen geführte Rahmen mit einer Spindelmutter versehen und zwischen der Spindelmutter und der Tragplatte eine auf die Spindelschraube aufgeschobene Druckfeder eingespannt sein. Um die Modellträgerplatte vollständig durch die Abhebeplatte einfassen zu können, kann auf einer äußeren Führungsstange ein Verriegelungsblech schwenkbar gelagert sein, das eine in die U-förmige Ausnehmung der Modellträgerplatte greifende Zunge aufweist.

Um den Spindeltrieb betätigen zu können, kann auf der Abhebeplatte eine Kurbel befestigt sein.

Zweckmäßigerweise ist auf der Abhebeplatte eine den Gußtrichter aufnehmende Haltevorrichtung befestigt. Diese Haltevorrichtung stellt sicher, daß auch die zu den einzelnen Teilen des modellierten Wachsmodells verlaufenden Wachsstränge beim Abheben nicht verformt werden.

Unter Verwendung des erfindungsgemäßen Systems ist es auch möglich, das Zahnkranzmodell um die Zahnstümpfe herum bis auf die Anschlußflächen für die zu modellierende Prothese abzuschleifen, so daß sich das Wachsmodell der Prothese dadurch behinderungsfrei aufmodellieren läßt, daß die sonst die Zahnstümpfe umgebenden grabenförmigen Vertiefungen beseitigt. Vor dem Abschleifen wird zu diesem Zweck ein Abdruck von dem Zahnkranzmodell genommen, so daß später das zum Zwecke der einfacheren Modellierung der Prothese abgeschliffene Material zwischen den Abdruck und dem in diesen eingesetzten Zahnkranzmodell wieder mit einer aushärtbaren Masse eingespritzt werden kann. Das erfindungsgemäße System ermöglicht es, das Zahnkranzmodell und den vor dem Abschleifen des Materials abgenommenen Abdruck in der richtigen Höhe zusammenzufügen, so daß sich durch das Einspritzen des aushärtbaren Materials das Zahnkranzmodell wieder in seine ursprüngliche Form verbringen läßt.

Ein Ausführungsbeispiel der Erfindung wird nachstehend anhand der Zeichnung näher erläutert. In dieser zeigt

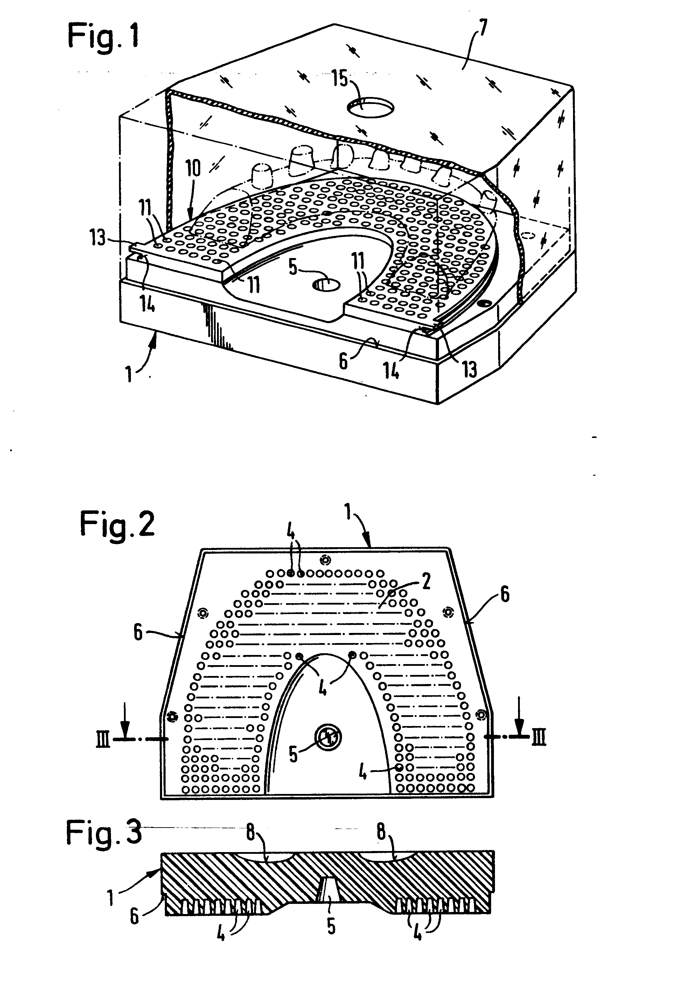

Figur 1 eine perspektivische Ansicht der Sockelplatte mit der ein Meistermodell tragenden Modellträgerplatte und aufgesetztem Deckel,

Figur 2 eine Draufsicht auf die Sockelplatte,

Figur 3 einen Schnitt durch die Sockelplatte nach Fig. 2 längs der Linie III-III,

Figur 4 eine Unteransicht der Sockelplatte,

Figur 5 eine perspektivische Ansicht der Modellträgerplatte,

Figur 6 eine perspektivische Ansicht des Gußverschlußdeckels,

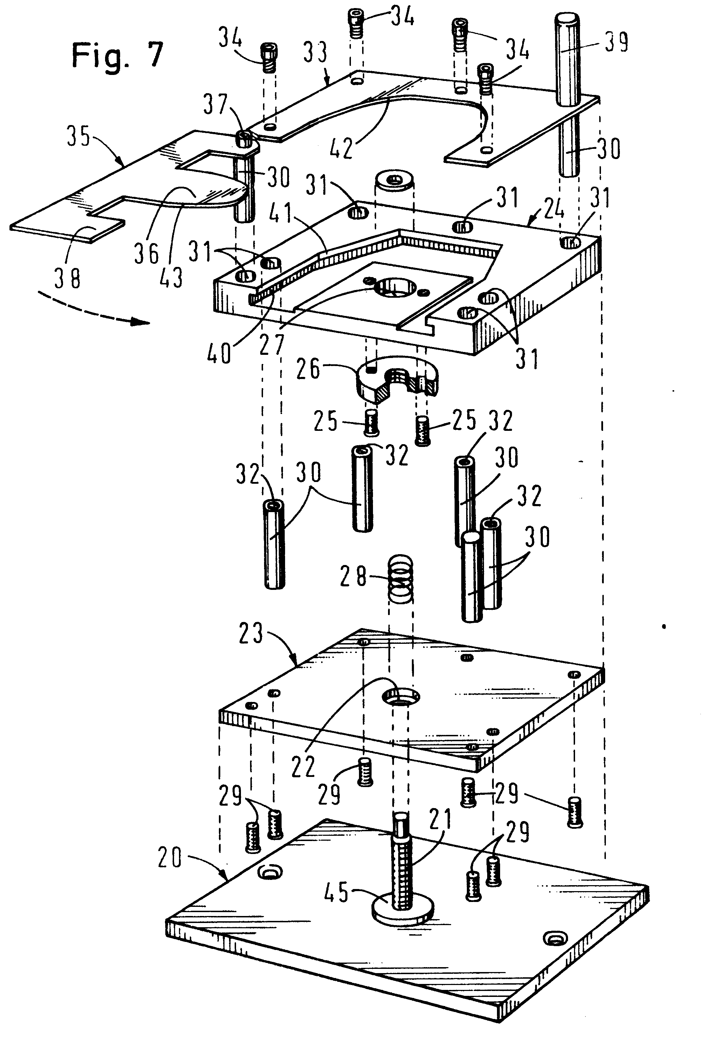

Figur 7 eine perspektivische Ansicht der auseinandergezogenen Einzelteile der Vorrichtung zum Abziehen der Modellträgerplatte von der Sockelplatte,

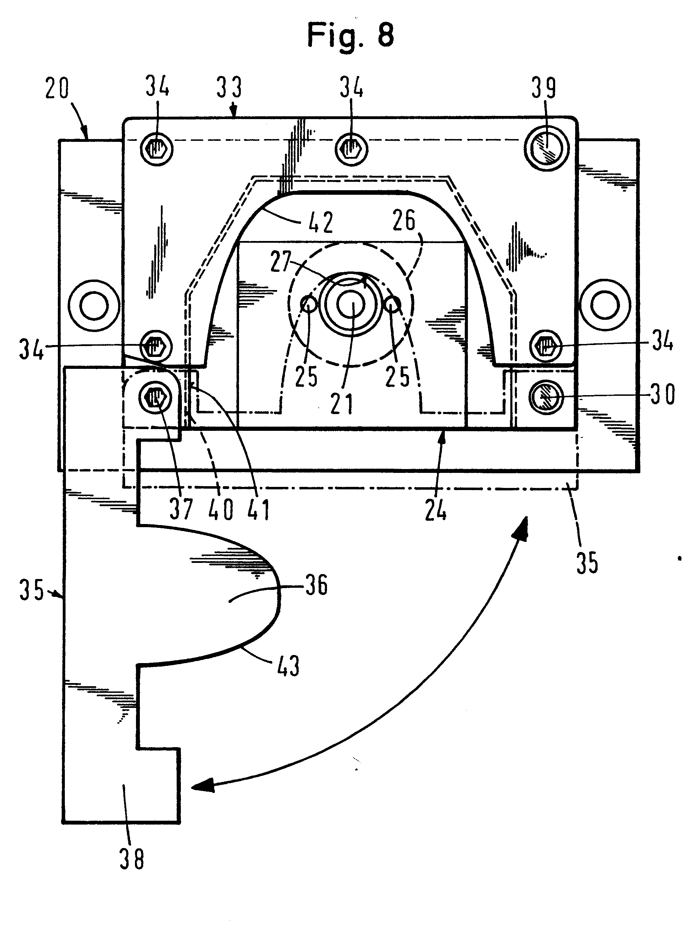

Figur 8 eine Draufsicht auf die montierte Vorrichtung nach Figur 7,

Figur 9 eine Seitenansicht der Vorrichtung nach Figur 8, teilweise im Schnitt,

Figur 10 eine der Figur 9 entsprechende Darstellung der Vorrichtung mit ausgefahrener Abhebeplatte und

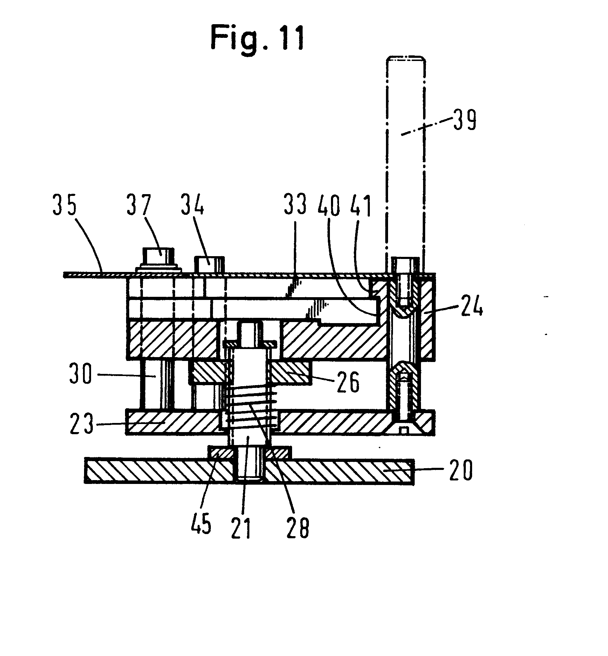

Figur 11 einen Schnitt durch die Vorrichtung entlang der Linie XI-XI in Figur 9.

Die Sockelplatte 1 besteht aus einer sechseckigen Platte, deren Grundform sich durch ein auf ein Rechteck aufgesetztes gleichschenkeliges Trapez beschreiben läßt. Die Sockelplatte 1 ist auf ihrer Oberseite mit einem hufeisenförmigen oder U-förmigen Feld 2 versehen, das dicht mit konusförmigen Bohrungen 4 versehen ist. In ihrem mittleren Bereich weist die Sockelplatte 1 eine konusförmige Bohrung 5 auf, in die ein nicht dargestellter Zentrierstift einsetzbar ist. Weiterhin weist die Sockelplatte 1 einen umlaufenden abgesetzten Rand 6 auf, auf den sich ein Deckel 7 klemmend aufschieben läßt.

Auf ihrer ebenen Rückseite weist die Sockelplatte 1 sternförmig nutenförmige Ausnehmungen 8 auf. Mittig zwischen diesen Ausnehmungen 8 ist in die Sockelplatte 1 eine Eisenplatte 9 eingelassen, die als Anker für einen Haltemagneten dient.

Die in ihrer Form dem Feld 2 entsprechende Modellträgerplatte 10 ist auf ihrer Oberseite dicht mit Ausnehmungen 11 besetzt, die dadurch hinterschnitten sind, daß sie sich in Richtung auf ihren Grund erweitern. Auf ihrer Unterseite weist die Modellträgerplatte 10 konusförmige Zapfen 12 auf, die mit den Ausnehmungen 4 der Sockelplatte fluchten. Weiterhin weist die Modellträgerplatte 10 seitliche Vorsprünge 13 und eine über ihren Rand verlaufende Nut 14 auf.

Der auf die Sockelplatte 1 aufsetzbare Deckel weist auf seiner Oberseite eine Öffnung 15 auf.

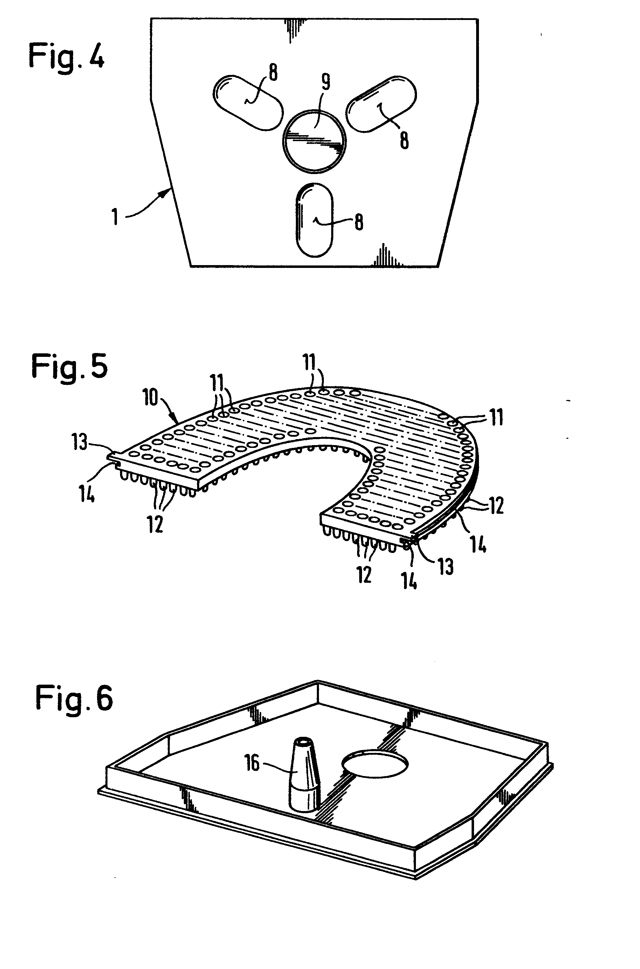

Der in Figur 6 dargestellte Gußverschlußdeckel entspricht in seiner Grundform der Sockelplatte 1. Er weist an der der Bohrung 5 der Sockelplatte 1 entsprechenden Stelle einen Trichter 16 auf. Neben dem Trichter ist der Gußverschlußdeckel mit einem Loch zum Einfüllen der Einbettmasse versehen.

Auf den Gußverschlußdeckel kann wiederum der Deckel 7 aufgesetzt werden, so daß sich eine versandfähige Verpackung ergibt.

Die Vorrichtung zum Abziehen der Modellträgerplatte 10 von der Sockelplatte 1 besteht aus einer Basisplatte 20, auf der mittig eine Spindelschraube 21 befestigt ist. Die Spindelschraube 21 durchsetzt eine Bohrung 22 in der Trägerplatte 23, die größer ist als der Durchmesser der Spindelschraube 21. Die Spindelschraube ist in ein mittiges Gewinde der Rahmenplatte 24 eingeschraubt. In dem dargestellten Ausführungsbeispiel ist mit den Schrauben 25 die mit einem Gewinde versehene Mutter 26 mittig auf die Rahmenplatte 24 aufgeschraubt, wobei eine fluchtende mittige Bohrung 27 in der Rahmenplatte 24 vorgesehen ist, die der Spindelschraube 21 freien Durchtritt gestattet. Auf die Spindelschraube 21 ist eine Druckfeder 28 in der Weise aufgesteckt, daß sie zwischen der Halteplatte 23 und der Mutter 26 im montierten Zustand eingespannt ist.

Auf der Halteplatte 23 sind durch die Schrauben 29 die Führungsstangen 30 befestigt. Die Rahmenplatte 24 ist mit mit den Führungsstangen 30 fluchtenden Führungsbohrungen 31 versehen, so daß die Halteplatte 23 durch die Führungsstangen 30 in den Führungsbohrungen 31 zu sich selbst parallel verschieblich geführt ist. Die hinteren Führungsstangen sind an ihren oberen Stirnseiten mit Gewindebohrungen 32 versehen, in die die Abhebeplatte 33 befestigenden Schrauben 34 eingeschraubt sind. Auf der linken vorderen Führungsstange ist durch die Schraube 37 das Verriegelungsblech 35 mit der mittigen Zunge 36 schwenkbar befestigt. Im eingeschwenkten Zustand des Verriegelungsbleches 35 liegt der dem Gelenk gegenüberliegende Schenkel 38 auf der Stirnfläche der rechten vorderen Führungsstange auf, die keine Gewindebohrung aufweist.

Auf die rechte hintere Führungsstange ist ein senkrechter Stift 39 aufgesetzt, der eine Kurbel bildet.

Mit der Kurbel läßt sich die rahmenförmige Platte 24 auf der Gewindeschraube 21 auf- und niederschrauben, so daß sich die Abhebeplatte 33 mit der Verriegelungsplatte 35 parallel zu der rahmenförmigen Platte 24 abheben und absenken läßt.

Die rahmenförmige Platte 24 ist mit einer mittleren Aussparung 40 versehen, deren Grundriß der Form der Sockelplatte 1 entspricht. Die Aussparung weist einen überkragenden Rand 41 auf, der sich nach dem Einschieben der Sockelplatte 1 über deren abgesetzten Rand 6 legt und somit die eingeschobene Sockelplatte 1 festhält.

Im niedergeschraubten Zustand der Abhebeplatte 33 legt sich deren Rand 42 in die Nut 14 der Modellträgerplatte oder unter deren überkragenden Rand, der statt der Nut 14 vorgesehen werden kann.

Der Rand 43 der Zunge 36 der Verriegelungsplatte 35 legt sich unter den inneren Rand der Modellträgerplatte 10, so daß sich diese bei eingeschwenkter Verriegelungsplatte 35 vollständig auf dieser und der Abhebeplatte 33 abstützt.

In Figur 9 ist die in die Vorrichtung eingeschobene Sockelplatte 1 mit aufgesetzter Modellträgerplatte 10 strichpunktiert dargestellt.

Aus Figur 10 ist ersichtlich, wie sich durch Aufschrauben der rahmenförmigen Platte 24 auf die Spindelmutter 21 durch die Abhebeplatte 33 die Modellträgerplatte 10 von der Sockelplatte 1 abziehen läßt.

Da sich die Trägerplatte 23 während des Abziehvorgangs auf der Basisplatte 20 abstützen muß, ist die Gewindespindel 21 an ihrem unteren Ende von einer Scheibe 45 eingefaßt, die ein Widerlager für die Trägerplatte 23 bildet.

Patentansprüche:

1. Vorrichtung zum Anfertigen von Kronen, Brücken, Zahnprothesen oder dergleichen mit einer Modellträgerplatte für das durch Ausgießen des von dem Kiefer entnommenen Abdrucks des Zahnkranzes hergestellte Modell, die auf ihrer dem Modell zugewandten Seite strukturiert ist und auf der gegenüberliegenden Seite Vorsprünge aufweist und die zur Entnahme einzelner Zahnmodelle zersägbar ist, dadurch gekennzeichnet, daß die Vorsprünge der Modellträgerplatte (10) aus dicht nebeneinander angeordneten Stiften (12) bestehen, die zur lösbaren Fixierung in mit diesen fluchtenden Ausnehmungen (4) einer Sockelplatte (1) eindrückbar sind.

2. Vorrichtung nach Anspruch 1, dadurch gekennzeichnet, daß die Modellträgerplatte (10) einen U-förmigen Grundriß aufweist.

3. Vorrichtung nach Anspruch 1 oder 2, dadurch gekennzeichnet, daß die Strukturierung der Modellträgerplatte (10) zur Fixierung des Modells aus dicht nebeneinanderliegenden Ausnehmungen oder Bohrungen (11) besteht.

4. Vorrichtung nach Anspruch 3, dadurch gekennzeichnet, daß die Ausnehmungen hinterschnitten sind.

5. Vorrichtung nach einem der Ansprüche 1 bis 4, dadurch gekennzeichnet, daß die Rastvorsprünge aus konusförmigen Zapfen bestehen und die Ausnehmungen der Sockelplatte komple-

0008093

- 2 -

mentär zu diesen ausgebildet sind.

6. Vorrichtung nach einem der Ansprüche 1 bis 5,
   dadurch gekennzeichnet,
   daß die Modellträgerplatte mit seitlichen Vorsprüngen versehen ist.

7. Vorrichtung nach einem der Ansprüche 1 bis 6,
   dadurch gekennzeichnet,
   daß die Modellträgerplatte mit einer seitlichen Nut
   zum Aufschieben eines Paßstückes versehen ist, über
   das sich diese mit der Sockelplatte verriegeln läßt.

8. Vorrichtung nach einem der Ansprüche 1 bis 7,
   dadurch gekennzeichnet,
   daß die Sockelplatte und die Modellträgerplatte aus
   Kunststoff bestehen.

9. Vorrichtung nach einem der Ansprüche 1 bis 8,
   dadurch gekennzeichnet,
   daß die Sockelplatte auf ihrer Rückseite mit der
   Zentrierung auf dem Artikulator dienenden Ausnehmungen versehen ist.

10. Vorrichtung nach Anspruch 9,
    dadurch gekennzeichnet,
    daß die Ausnehmungen aus drei sternförmig zueinander
    angeordneten nutförmigen Vertiefungen bestehen.

11. Vorrichtung nach Anspruch 9 oder 10,
    dadurch gekennzeichnet,
    daß auf der Rückseite der Sockelplatte eine Eisenplatte eingelassen ist.

12. Vorrichtung nach einem der Ansprüche 1 bis 11,
    dadurch gekennzeichnet, daß die Sockelplatte mit einem abgesetzen umlaufenden Rand versehen ist, auf den ein Deckel mit herabgezogenen Seitenwänden klemmend aufsetzbar ist.

13. Vorrichtung nach Anspruch 12,
dadurch gekennzeichnet,
daß der Deckel aus Plexiglas besteht.

14. Vorrichtung nach Anspruch 12 oder 13,
dadurch gekennzeichnet,
daß der Deckel auf seiner Oberseite mit einem Loch versehen ist.

15. Vorrichtung nach einem der Ansprüche 12 bis 14,
dadurch gekennzeichnet,
daß auf den Deckel eine Gußverschlußplatte mit einem der Sockelplatte entsprechenden umlaufenden Rand aufsetzbar ist, der mit einer Öffnung versehen ist.

16. Vorrichtung nach einem der Ansprüche 1 bis 15,
dadurch gekennzeichnet,
daß etwa mittig in der Sockelplatte eine Ausnehmung vorgesehen ist, in die ein Zentrierstift einsetzbar ist, und eine Gußverschlußplatte an der entsprechenden Stelle einen Trichter aufweist.

17. Vorrichtung nach einem der Ansprüche 1 bis 7,
dadurch gekennzeichnet,
daß die Sockelplatte aus Metall besteht.

18. Vorrichtung nach einem der Ansprüche 1 bis 17,
dadurch gekennzeichnet,
daß die das Zahnkranzmodell tragende und auf die Sockelplatte (1) aufgesteckte, gegebenenfalls in mehrere Stücke zersägte Modellträgerplatte (10) mit diesem in einen Rahmen (24) einschiebbar ist, der die Sockelplatte (1) senkrecht zu ihrer mit Ausnehmungen versehenen Oberseite festlegt, daß parallel zu dem Rahmen (24) ein zweiter, unter einen umlaufenden Rand der Modellträgerplatte (10) greifender, eine Abhebeplatte (33) bildender Rahmen angeordnet ist und daß Einrichtungen vorgesehen sind, die die miteinander fluchtenden Rahmen parallel zueinander voneinander weg und aufeinander zu bewegen.

19. Vorrichtung nach Anspruch 18,
dadurch gekennzeichnet,
daß der die Sockelplatte (1) festlegenden Rahmen (24) Führungsbohrungen (31) für parallel zueinander auf einer Tragplatte (23) befestigte Führungsstangen (30) aufweist, daß die unter den Rand der Modellträgerplatte (10) greifende Abhebeplatte (33) auf diesen Führungsstangen (30) befestigt ist und daß zum Verschieben des Rahmens und der Abhebeplatte (33) relativ zueinander eine Verstellspindel (21, 26) vorgesehen ist.

20. Vorrichtung nach Anspruch 18 oder 19,
dadurch gekennzeichnet,
daß die Spindelschraube (21) die Tragplatte (23) in einer gewindefreien Bohrung (22) durchsetzt und auf einer Basisplatte (20) befestigt ist, daß der auf den Führungsstangen (30) geführte Rahmen (24) mit einer Spindelmutter (26) versehen ist und daß zwischen der Spindelmutter (26) und der Tragplatte (23) eine auf die Spindelschraube (21) aufgeschobene Druckfeder (28) eingespannt ist.

21. Vorrichtung nach einem der Ansprüche 18 bis 20,
dadurch gekennzeichnet,
daß auf einer äußeren Führungsstange (30) ein Ver-

0008093

riegelungsblech (35) schwenkbar gelagert ist, das eine in die U-förmige Ausnehmung der Modellträgerplatte (10) greifende Zunge (36) aufweist.

22. Vorrichtung nach einem der Ansprüche 18 bis 21, dadurch gekennzeichnet, daß das freie Ende des eingeschwenkten Verriegelungsbleches (35) auf einer Führungsstange (30) abgestützt ist.

23. Vorrichtung nach einem der Ansprüche 18 bis 22, dadurch gekennzeichnet, daß auf der Abhebeplatte (33) eine Kurbel (39) befestigt ist.

24. Vorrichtung nach einem der Ansprüche 18 bis 23, dadurch gekennzeichnet, daß auf der Abhebeplatte (33) eine den Gußtrichter haltende Einrichtung befestigt ist.

0008093

**Fig. 1**

**Fig. 2**

**Fig. 3**

0008093

Fig. 4

8

9

8

8

1

Fig. 5

10

11

11

11

13

14

12

11

12

12

14

13

12

14

Fig. 6

16

0008093

Fig. 7

## Fig. 8

## Fig. 9

## Fig. 10

# Fig. 11

**Europäisches Patentamt**

## EUROPÄISCHER RECHERCHENBERICHT

EP 79 102 799.8

| EINSCHLÄGIGE DOKUMENTE | | | KLASSIFIKATION DER ANMELDUNG (Int.Cl.³) |
|---|---|---|---|
| Kategorie | Kennzeichnung des Dokuments mit Angabe, soweit erforderlich, der maßgeblichen Teile | betrifft Anspruch | A 61 C 13/00 |
| | DE - A - 1 914 244 (STENGEL) <br> * Seite 2, Zeile 8 bis Seite 5, Zeile 30 * <br> -- | 1-5,8 | |
| | US - A - 4 030 197 (LINCK II et al.) <br> * Spalte 1, Zeilen 22 und 23; Spalte 2, Zeilen 14 bis 16 * <br> -- | 9,17 | |
| D | DE - U - 7 412 852 (HERAEUS) <br> * Seite 1, Zeile 1 bis Seite 3, Zeile 22 * <br> -- | 1,8 | **RECHERCHIERTE SACHGEBIETE (Int. Cl.³)** <br> - |
| A | US - A - 4 059 902 (SHIOKAWA) <br> * ganzes Dokument * <br> -- | 1 | A 61 C 11/00 <br> A 61 C 13/00 |
| A | US - A - 3 937 773 (HUFFMAN) <br> * ganzes Dokument * <br> -- | 1 | |
| A | US - A - 3 838 187 (THOMAS) <br> * ganzes Dokument * <br> ---- | 1 | |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 07-11-1979 | SIMON |

EPA form 1503.1 06.78